# EUROPÄISCHE PATENTSCHRIFT

(11) **EP 0 625 245 B1**
(45) Veröffentlichungstag und Bekanntmachung des Hinweises auf die Patenterteilung: **20.09.1995**
(21) Anmeldenummer: 93902040.0
(22) Anmeldetag: 22.01.1993
(51) Int. Cl.: F04D 13/02, B60H 1/32

(54) **AGGREGAT ZUM FÖRDERN EINES FLÜSSIGEN MEDIUMS, INSBESONDERE EINES WÄRMETRÄGERS, IN DEM ZU EINEM KRAFTFAHRZEUG GEHÖRENDEN KÜHL-HEIZKREISLAUF**
ASSEMBLY FOR CONVEYING A LIQUID MEDIUM, ESPECIALLY A HEAT CARRIER, IN THE COOLING AND HEATING CIRCUIT OF A MOTOR VEHICLE
ENSEMBLE POUR ACHEMINER UN MILIEU LIQUIDE, NOTAMMENT UN AGENT CALOPORTEUR, DANS LE SYSTEME DE CHAUFFAGE ET DE REFROIDISSEMENT D'UN VEHICULE AUTOMOBILE

(30) Priorität: 06.02.1992 DE 4203381
(43) Veröffentlichungstag der Anmeldung: 23.11.1994
(73) Patentinhaber: ROBERT BOSCH GMBH, 70442 Stuttgart (DE)
(72) Erfinder: SCHIRPKE, Bernd, D-7580 Bühl (DE); LENTZ, Gerd, D-7580 Bühl (DE); HEIER, Christoph, D-7557 Iffezheim (DE); KIEFER, Klaus, D-7597 Rheinau (DE)
(86) Internationale Anmeldenummer: DE9300050
(87) Internationale Veröffentlichungsnummer: WO9316284

(56) Entgegenhaltungen:
- DE-A- 3 536 092
- DE-A- 3 704 671
- US-A- 4 539 498

## Beschreibung

### Stand der Technik

Die Erfindung geht aus von einem Aggregat nach der Gattung des Hauptanspruchs. Es ist schon ein solches Aggregat im Handel, bei dem sich eine feuchtigkeitsdichte Trennwand zwischen den Kupplungshälften der Magnetkupplung befindet. Dadurch kann keine Feuchtigkeit aus dem Kreislauf entweichen. Durch die aufgabenbedingte Anordnung des Förderaggregats im Bereich der Strahlungswärme der Brennkraftmaschine eines Kraftfahrzeuges ergibt sich im Motorraum des Antriebsmotors eine sehr trockene Atmosphäre, durch welche der Verschleiß an den Schleifbürsten bekanntermaßen sehr begünstigt wird, wenn als Schleifbürsten sogenannte Kohlebürsten Verwendung finden. Es hat sich gezeigt, daß ein Feuchtigkeitsgehalt der im Bereich der Kohlenbürsten vorhandene Luft von 3 Gramm pro m³ bis 25 Gramm pro m³, insbesondere aber von 8 bis 15 Gramm pro m³ hinsichtlich des Kohlenbürstenverschleisses optimale hygrometrische Bedingungen schafft.

### Vorteile der Erfindung

Das erfindungsgemäße Förderaggregat mit den kennzeichnenden Merkmalen des Hauptanspruchs hat gegenüber dem bekannten Aggregat den Vorteil, daß die durch die Trennwand aus dem Kreislauf austretende und in den Motorraum gelangende geringe Flüssigkeitsmenge eine solche, günstige Atmosphäre schafft, weil diese Flüssigkeitsmenge als Dampf durch die Wand hindurchtritt.

Durch die in den Unteransprüchen aufgeführten Maßnahmen sind vorteilhafte Weiterbildungen und Verbesserungen des im Hauptanspruch angegebenen Förderaggregats möglich. Besonders vorteilhaft ist die feuchtigkeitsdurchlässige Wand aus einem Kunststoff herzustellen.

### Zeichnung

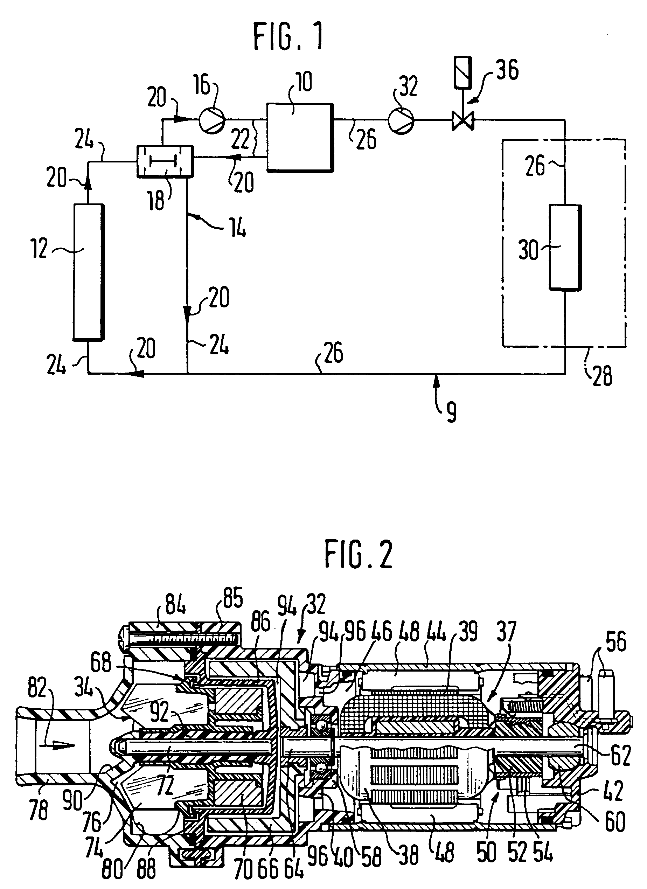

Ein Ausführungsbeispiel der Erfindung ist in der Zeichnung dargestellt und in der nachfolgenden Beschreibung näher erläutert. Es zeigen Figur 1 eine schematische Darstellung eines zu einem Kraftfahrzeuge gehörenden Kühl-Heizkreislaufes, zu dem eine den Heizkreislauf stützende, elektromotorisch angetriebene Zusatzpumpe gehört und Figur 2 einen Längsschnitt durch ein gegenständlich dargestelltes Förderaggregat mit der Zusatzpumpe und dem elektrischen Antriebsmotor.

### Beschreibung des Ausführungsbeispiels

Zu einem in Figur 1 dargestellten Kühl-Heizkreislauf 9 einer Kraftfahrzeug-Brennkraftmaschine 10 gehört ein Kühler 12, der über den Kühlkreislauf 14 mit der Brennkraftmaschine leitend verbunden ist. In den Kühlkreislauf 14 liegen eine von der Brennkraftmaschine 10 angetriebene Wasserpumpe 16 und ein Thermostatventil 18. Während des Betriebs der Brennkraftmaschine 10 fördert die Wasserpumpe 16 die als Wärmeträger dienende Flüssigkeit in Richtung der Pfeile 20 durch den Kühler 12, wo das Kühlwasser einen großen Teil seiner Wärme abgibt und wieder als Kühlmittel geeignet ist. Das Thermostatventil 18 sorgt bei noch kalter Brennkraftmaschine dafür, daß der Kühlmittelkreislauf 14 zunächst auf einen kleinen Leitungskreis 22 beschränkt bleibt, bis eine entsprechende Erwärmung des Kühlmittels eingetreten ist. Danach öffnet das Thermostatventil 18 und das Kühlmittel strömt über den großen Kühlmittelkreis 24, wobei es durch den Kühler 18 hindurchgeführt wird. Diesem Kühlmittelkreislauf 22 bzw. 24 ist ein Heizkreislauf 26 ist zugeordnet. Der Heizkreislauf 26 führt durch den Fahrgastraum 28 des nicht dargestellten Kraftfahrzeuges, wobei es einen Wärmetauscher 30 durchströmt. Der Wärmetauscher 30 gibt Wärme an den Fahrgastraum 28 ab. Zur Unterstützung des Heizkreislaufs 26 ist ein Förderaggregat 32 angeordnet, das eine Wasserpumpe 34 enthält. Diese Förderpumpe unterstützt den Durchfluß des von der Brennkraftmaschine 10 kommenden, erwärmten Kühlflüssigkeit und drückt diese über ein Ventil 36 durch den Wärmetauscher 30 zurück zum Kühlkreislauf 22, 24. Dem Wärmetauscher 30 wird also während des Betriebs der Brennkraftmaschine und nach Überwindung der Anlaufzeit maximal erwärmte Kühlflüssigkeit zugeführt, die dem Fahrgastraum 28 über den Wärmetauscher 30 rasch erwärmt. Das Zusatz-Förderaggregat 32 sorgt dabei für einen ausreichenden Durchsatz von erwärmter Flüssigkeit durch den Wärmetauscher 30. Bei entsprechender Erwärmung des Fahrgastraumes 28 sperrt das Ventil 36 die Heizleitung 26. Gleichzeitig wird das Förderaggregat 32 stillgesetzt.

Der Aufbau des Förderaggregats 32 ist in Figur 2 dargestellt. Es weist einen elektrischen Antriebsmotor 37 auf, dessen Motoranker 38 in stirnseitigen Gehäusewänden 40 und 42 gelagert ist. Weiter hat der elektrische Antriebsmotor 37 ein rohrförmiges Gehäuseteil 44, das zusammen mit den Bauteilen 40 und 42 ein Motorgehäuse bildet.

Innerhalb des Motorgehäuses 40, 42, 44 ergibt sich ein Raum 46, in welchem wesentliche Teile des Elektromotors 37 untergebracht sind. Neben den Motoranker 38 mit dem Ankerpaket 39 sind dort an dem Gehäuseteil 44 angeordnete Permanentmagnete 48 untergebracht. Auch befindet sich in diesem Raum eine Kommutiereinrichtung 50 des Antriebsmotors 37, die neben einem Trommelkollektor 52 als Kohlebürsten ausgebildte Schleifbürsten 54 hat, die über an der Außenseite des Gehäuseteils 42 angeordnete Anschlußmittel 56 verfügen, welche zu einem nicht dargestellten elektrischen Arbeitsstromkreis für den Antriebsmotor 37 führen. Die Gehäuseteile 40 und 42 dienen zur Aufnahme von Lagerungen 58, 60 für die Welle 62 des Motorankers 38. Die Motorwelle 62 durchsetzt die Gehäusewand 40, 58 mit einem Endabschnitt 64, an dem die erste, motorseitige Hälfte 66 einer Magnetkupplung 68 befestigt ist. Diese erste Kupplungshälfte 66 ist topfförmig ausgebildet. In dem Topfinneren ist die zweite, walzenförmige Kupplungshälfte 70 der Magnetkupplung 68 angeordnet. Sie sitzt auf einer Pumpenwelle 72, die auch das Förderglied 74 einer als Strömungspumpe ausgebildeten Förderpumpe 34 trägt. Das Förderglied 74 läuft in einer Pumpenkammer 76 um, die über einen Saugstutzen 78 mit den Heizkreislauf 26 verbunden ist. Weiter hat die Förderkammer 76 einen Ausgang 80, über welchen das erwärmte Kühlwasser die Pumpenkammer 76 verläßt und wieder in den Halskreislauf 26 gelangt. Die einströmende Flüssigkeit ist in Figur 2 durch den Pfeil 82 symbolisiert. Die Pumpenkammer 76 sowie der Anschlußstutzen 78 gehören zu einem Pumpengehäuse 84. Zwischen dem Motorgehäuse 40, 42, 44 und dem Pumpengehäuse 48 befindet sich ein Zwischengehäuse 84, welches das Pumpengehäuse und das Motorgehäuse miteinander verbindet. Dieses Zwischengehäuse 84 umschließt wesentliche Teile der Magnetkupplung 68, so daß es auch als Kupplungsgehäuse bezeichnet werden kann. Wie Figur 2 weiterzeigt ist im Bereich der Magnetkupplung 68 eine topfförmige Wand 86 angeordnet, welche weit in die Topfform der ersten Kupplungshälfte 66 eintaucht. Diese topfförmige Zwischenwand 86 ist über einen am Topfrand befindlichen Ringflansch 88 zwischen den beiden Gehäuseteilen 48 und 84 eingespannt. Diese Zwischenwand 86 dient als Träger für das eine Ende der Achse 72, deren anderes Ende in einer Wand 90 des Pumpengehäuses 48 gehalten ist. Das Förderglied 74 der Förderpumpe 34 ist drehfest mit der zweiten Kupplungshälfte 70 verbunden und über ein gemeinsame Laufbuchse 92 auf der Achse 72 drehbar gelagert. Die topfförmige Zwischenwand 86 ist aus einem Kunststoff gefertigt, welcher eine geringfügige Menge von der zu pumpenden Heizflüssigkeit durchtreten läßt. Diese geringe Flüssigkeits- oder Dampfmenge gelangt in einen Zwischenraum 94, welcher durch die Zwischenwand 86 einerseits und durch das Motorgehäuseteil 40 sowie durch das Gehäuseteil 84 begrenzt ist. In der so gebildeten Zwischenkammer 94 läuft während des Betriebs des Förderaggregats 32 die aus einem Plastoferrit gefertigte erste Kupplungshälfte 66 um. Dabei wird durch die vorhandenen Magnetwerte, welche durch die Zwischenwand 86 hindurchtreten, die andere zweite, aus einem Hartferrit bestehende Kupplungshälfte 70 mitgenommen, wobei auch das Förderglied 74 der Förderpumpe 34 in Drehbewegung versetzt wird, so daß die Förderbewegung des Glieds 74 einsetzt. In der Gehäusewand 40 des Elektromotors 37 befinden sich mehrere Durchbrechungen 96, welche die Zwischenkammer 94 mit dem Motorraum 46 verbinden. Durch diese Durchbrechungen 96 gelangt Luft aus der Zwischenkammer 94 in den Raum 46 des Elektromotors. Dieses Hindurchtreten durch die Durchbrechungen 96 wird dabei von dem umlaufenden Motoranker 38 unterstützt. Somit bildet sich im Raum 46 eine mit Feuchtigkeit angereicherte Atmosphäre aus, welche zu den eingangs erwähnten Vorteilen der erfindungsgemäßen Ausgestaltung des Förderaggregats führt. Die Zwischenwand 86 kann dabei in Abhängigkeit von den gewählten Kunststoff so dimensioniert werden, daß sich der Grad der Luftfeuchtigkeit in den eingangs erwähnten Grenzen bewegt. Dabei geht in eine solche Überlegung zweifellos auch noch der jeweilige Abstand ein, mit dem das Förderaggregat, insbesondere die Kollektorseite des Elektromotors 37 von der Brennkraftmaschine 10 entfernt ist. Dies deshalb, weil der Raum 46 des Elektromotors 37 durch die Strahlungswärme der Brennkraftmaschine 10 erheblich aufgeheizt werden kann, was zu einer hinsichtlich des Verschleisses der Kohlenbürsten 54 zu einer ungünstigen Atmosphäre beiträgt.

## Patentansprüche

1. Aggregat zum Fördern eines flüssigen Mediums, insbesondere eines Wärmeträgers, in dem zu einem Kraftfahrzeug gehörenden Kühl-Heizkreislauf (9), mit einem elektrischen, einen Kollektor (52) und an dessen Lauffläche angelegten Schleifbürsten (54) aufweisenden Antriebsmotor (37) für eine in den Kreislauf liegende Förderpumpe (34), deren Förderglied (74) mit der einen Kupplungshälfte (70) und der Motoranker (38) mit der anderen Kupplungshälfte (66) einer Magnetkupplung (68) drehfest verbunden sind und ein vorzugsweise mehrteiliges Aggregatgehäuse (40, 42, 44) einen den Motor (37) aufnehmenden Raum (46) und eine das Förderglied (74) der Pumpe (34) aufweisende Kammer (76) umgibt, dadurch gekennzeichnet, daß zwischen den beiden Kupplungshälften (66, 70) eine feuchtigkeitsdurchlässige Wand (86) angeordnet ist, welche die Pumpkammer (76) von dem Motorraum (46) trennt.

2. Aggregat nach Anspruch 1, bei dem der Anker des Antriebsmotors in einer flanschartigen, zwischen dem Ankerpaket und der Magnetkupplung angeordnetem Gehäusewand gelagert ist, dadurch gekennzeichnet, daß diese Zwischen-Gehäusewand (40) wenigstens eine Durchbrechung (96) aufweist, welche den Motorraum (46) mit einer die motorseitige Kupplungshälfte (66) aufnehmende Zwischenkammer (94) verbindet.

3. Aggregat nach Anspruch 2, dadurch gekennzeichnet, daß in der Zwischen-Gehäusewand (40) mehrere Durchbrechungen (96) angeordnet sind.

4. Aggregat nach einem der Ansprüche 1 bis 3, dadurch gekennzeichnet, daß die feuchtigkeitsdurchlässige Wand (86) aus einem Kunststoff besteht.

## Claims

1. Assembly for conveying a liquid medium, especially a heat carrier, in the cooling and heating circuit (9) of a motor vehicle, with an electric drive motor (37), having a commutator (52) and wiper brushes (54) applied to the running surface of the latter, for a feed pump (34) which is connected into the circuit and of which the feed member (74) is connected fixedly in terms of rotation to one coupling half (70) and the motor armature (38) to the other coupling half (66) of a magnetic coupling (68), and a preferably multi-part assembly housing (40, 42, 44) surrounds a space (46), receiving the motor (37), and a chamber (76) having a feed member (74) of the pump (34), characterized in that a moisture-permeable wall (86) with separates the pumping chamber (76) from the motor space (46) is arranged between the two coupling halves (66, 70).

2. Assembly according to Claim 1, in which the armature of the drive motor is mounted in a flange-like housing wall arranged between the laminated armature core and the magnetic coupling, characterized in that this intermediate housing wall (40) has at least one perforation (96) which connects the motor space (46) to an intermediate chamber (94) receiving the motor-side coupling half (66).

3. Assembly according to Claim 2, characterized in that a plurality of perforations (96) are arranged in the intermediate housing wall (40).

4. Assembly according to one of Claims 1 to 3, characterized in that the moisture-permeable wall (86) consists of a plastic.

## Revendications

1. Groupe pour refouler un milieu liquide, notamment un agent caloporteur, dans le circuit de refroidissement et de chauffage (9) faisant partie d'un véhicule automobile, avec un moteur électrique d'entraînement (37) comportant un collecteur (52) et des balais (4) s'appliquant sur la surface de celui-ci, pour une pompe de refoulement (34) placée dans le circuit et dont l'organe de refoulement (74) est solidaire en rotation d'une moitié (70) d'un embrayage magnétique (68) tandis que l'induit (38) du moteur est solidaire en rotation de l'autre moitié (66) de cet embrayage, et un carter de groupe (40, 42, 44) comportant de préférence plusieurs parties entourant un compartiment (46) dans lequel est logé le moteur (37) et une chambre (76) comportant l'organe de refoulement (74) de la pompe (34),
groupe caractérisé en ce que entre les deux moitiés d'embrayage (66, 70) est disposée une paroi (86) perméable à l'humidité qui sépare la chambre de la pompe (76) du compartiment moteur (46).

2. Groupe selon la revendication 1, dans lequel l'induit du moteur d'entraînement est monté sur une paroi de carter en forme de collerette disposée entre le paquet d'induit et l'embrayage magnétique, caractérisé en ce que cette paroi intermédiaire (40) de carter comporte au moins un ajour (96) qui relie le compartiment moteur (46) avec une chambre intermédiaire (94) dans laquelle est logée la moitié d'embrayage (66) côté moteur.

3. Groupe selon la revendication 2 caractérisé en ce que dans la paroi intermédiaire (40) du carter sont disposés plusieurs ajours (96).

4. Groupe selon une des revendications 1 à 3 caractérisé en ce que la paroi (86) perméable à l'humidité est constituée d'une matière synthétique.
